# EUROPÄISCHE PATENTSCHRIFT

(11) **EP 3 658 641 B1**
(45) Veröffentlichungstag und Bekanntmachung des Hinweises auf die Patenterteilung: **29.05.2024**
(21) Anmeldenummer: 17745184.6
(22) Anmeldetag: 27.07.2017
(51) Int. Cl.: C09J 7/38, C09J 7/29, B60R 16/02

(54) **KLEBEBAND MIT MEHRFACHBESCHICHTUNG UND VERFAHREN ZU DESSEN HERSTELLUNG**
ADHESIVE TAPE HAVING MULTIPLE COATINGS AND PROCESS FOR THE PRODUCTION THEREOF
RUBAN ADHÉSIF COMPRENANT UN REVÊTEMENT MULTICOUCHE ET SON PROCÉDÉ DE PRODUCTION

(43) Veröffentlichungstag der Anmeldung: 03.06.2020
(73) Patentinhaber: Coroplast Fritz Müller GmbH & Co. KG, 42279 Wuppertal (DE)
(72) Erfinder: BEITMANN, Marko, 31515 Wunstorf (DE); RÖNISCH, Ralf, 42349 Wuppertal (DE)
(74) Vertreter: Dr. Solf & Zapf Patent- und Rechtsanwalts PartG mbB
(86) Internationale Anmeldenummer: PCT/EP2017/069064
(87) Internationale Veröffentlichungsnummer: WO 2019/020188

(56) Entgegenhaltungen:
- EP-A1- 2 045 303
- EP-A1- 2 520 629
- EP-A2- 1 136 535
- DE-U1-202004 019 761

## Beschreibung

Die vorliegende Erfindung betrifft ein Klebeband, insbesondere ein Kabelwickelband, mit einem textilen Träger, der mindestens auf einer Seite mit einer Klebeschicht versehen ist, die mindestens zwei Teilschichten umfasst, von denen die erste Teilschicht unmittelbar am Träger angeordnet ist und die zweite Teilschicht auf der ersten Teilschicht aufliegt.

Des Weiteren betrifft die vorliegende Erfindung ein Verfahren zur Herstellung eines derartigen Klebebandes.

Ein Klebeband der genannten Art ist aus einer Ausführungsform der EP 1 655 079 A2 bekannt. Dieses Dokument beschreibt in allgemeiner Form zunächst ein Verfahren zur Beschichtung von bahnförmigen Substraten, durch welches einfach und kostengünstig Klebebänder mit mehreren Klebstoffschichten bereitgestellt werden sollen. Dazu ist vorgesehen, dass das Substrat zumindest teilflächig mit einem ersten Klebstoff beschichtet wird und nachfolgend das mit dem ersten Klebstoff beschichtete Substrat mit mindestens einem weiteren, zweiten Klebstoff zumindest teilflächig beschichtet wird. Hierbei ist während der Beschichtung mit dem weiteren Klebstoff der erste Klebstoff noch nass oder noch nicht ausgehärtet. Des Weiteren beschreibt das Dokument ein Klebeband, das nach einem derartigen Verfahren hergestellt ist und ein bahnförmiges Substrat sowie mindestens zwei einander vollständig, teilweise oder - bevorzugt gemäß einem figürlich dargestellten Ausführungsbeispiel - nicht überlappend auf dem Substrat angeordnete Klebstoffschichten umfasst. Als Substratmaterialien kommen dabei gemäß der EP 1 655 079 A2 undifferenziert alle bahnförmigen Materialien in Frage, wie beispielsweise Papiere, Gewebe, Vliese, Kunststofffolien oder Elastomere, die jeweils unterschiedliche Dicken, Strukturen und Polymerzusammensetzungen aufweisen können.

Typische Kabelwickelbänder, bestehend aus z. B. - wie gemäß der EP 2 050 802 A1 - einem textilen Träger in Kombination mit beispielsweise einem Haftklebstoff auf Basis von Synthesekautschuk oder Acrylaten (gemäß der EP 2 050 802 A1 aber nicht mit mindestens zwei Teilschichten), zeigen insbesondere in Abhängigkeit von dem eingesetzten Klebstoff bestimmte klebtechnische Eigenschaften und insbesondere in Abhängigkeit von dem eingesetzten Trägermaterial bestimmte Eigenschaften hinsichtlich der Parameter Reißfestigkeit und Reißdehnung, Geräuschdämpfung und Abrieb. Allerdings generiert erst die Kombination eines spezifischen Trägermaterials mit einem spezifischen Klebstoff ein bestimmtes Eigenschaftsprofil eines Klebebandes, insbesondere eines Kabelwickelbandes. Zu den klebtechnischen Gebrauchseigenschaften von Klebebändern zählen beispielsweise die Klebkraft auf bestimmten Materialien, wie auf Stahl, die Klebkraft auf dem Bandrücken und die Abrollkraft. Einige dieser Parameter werden nach der Norm DIN EN 1939:2003-12 "Klebebänder - Bestimmung der Klebkraft" ermittelt.

Klebebänder der genannten Art müssen hinsichtlich ihrer Gebrauchseigenschaften auch weitere einheitliche Standards, insbesondere gemäß der LV 312 (10/2009), welche normierende Vorschriften enthält, erfüllen. Dieses Dokument klassifiziert Klebebänder im Hinblick auf ihre Eigenschaften für Anwendungen in der Automobilindustrie, vorzugsweise zum Bündeln und Umwickeln von Leitungen und Leitungssätzen. Das genannte Dokument wurde von den Vertretern der Automobilhersteller AUDI AG, BMW AG, Daimler AG, Porsche AG und Volkswagen AG in Kooperation mit Klebebandherstellern erarbeitet. Wenn nachfolgend die LV 312 oder andere Normen erwähnt werden, sind immer die zum Anmeldezeitpunkt gültigen Ausgaben gemeint. Durch die Norm wird ein bestimmtes Anforderungsprofil eines Kabelwickelbandes vorgegeben, mit denen das Eigenschaftsprofil des Klebebandes übereinstimmen muss.

Im Gegensatz zu den in der EP 1 655 079 A2 ebenfalls genannten Kunststofffolien und Elastomeren werden textile Trägermaterialien, wie Gewebe und Vliesstoffe, aufgrund ihrer Porosität bei der Beschichtung mit Haftklebstoffen zunächst oft mit einer bestimmten Menge des Klebstoffs "gefüllt", und nur ein gewisser Anteil der gesamten Klebstoffmenge wirkt anschließend als klebrige Schicht für das zu beklebende Gut. Textile Träger mit dieser Eigenschaft werden daher anmeldungsgemäß als "offene Träger" angesehen, während Folienträger aufgrund ihrer - abgesehen von eventuell vorhandenen Mikroporen, die für eine Klebstoffpenetration unerheblich sind - porenfreien Oberfläche - als "geschlossene Träger" bezeichnet werden.

Die EP 2 520 629 A1 beschreibt ein Verfahren zur Herstellung eines Klebebandes insbesondere zum Umwickeln von Kabeln aus einem textilen Träger und einer darauf einseitig beschichteten Haftklebemasse, wobei die Scherviskosität der Haftklebemasse bei einer Temperatur von 25 °C während der Beschichtung aus einer Dispersion 200 bis 100.000 Pa*s bei einer Schergeschwindigkeit von 10⁻² s⁻¹ und 0,1 bis 10 Pa*s bei einer Schergeschwindigkeit von 100 s⁻¹ beträgt. Der textile Träger ist ein Gewebe, vorzugsweise ein Polyestergewebe. In dem Dokument werden u. a nach DIN EN ISO 9237 bestimmte Luftdurchlässigkeiten für den Träger genannt. Diese sollen unter einem Wert von 200 l/m²s, bevorzugt unter 130 l/m²s, liegen. Bei dementsprechend wenigen und engen Poren erscheint eine Füllung derselben nicht angezeigt.

Die in ein offenes Trägermaterial eingeflossene Menge Klebstoff ermöglicht mit Vorteil eine ausreichende Verankerung der Klebstoffschicht im Träger, steht aber nachteiligerweise nicht für den Kontakt mit dem zu beklebenden Gut, wie einem Kabelsatz, zur Verfügung. Die Beschichtung kann dabei mit einem Eisberg verglichen werden, bei dem - ähnlich wie bei der beschriebenen Klebstoffbeschichtung - nur eine kleinere Menge des Eises oberhalb der Wasseroberfläche, die im Falle des Klebebandes der Trägeroberfläche entspricht, zu sehen ist. Oft kann ein großer Anteil des beschichtenden Klebstoffs in den Träger wandern und daher nicht in Wechselwirkung mit dem zu verklebenden Gut treten.

Die EP 1 448 744 A1 beschreibt ein Klebeband mit einem bandförmigen, insbesondere aus einem Feingewebe bestehenden Träger und mit einer ein- und/oder beidseitig auf den Träger aufgebrachten Klebebeschichtung. Das Spezifikum dieses bekannten Klebebandes besteht dabei darin, dass der Träger zumindest bereichsweise ein- und/oder beidseitig eine glattgeschliffene Oberfläche aufweist. Durch ein derartiges Überschleifen der Oberfläche - auch als Chintzen bezeichnet - wird die Trägeroberfläche verdichtet, so dass der Träger zu einem geschlossen Träger wird, und beim Auftragen kann so ein Einsinken des Klebstoffs in den Träger verhindert bzw. zumindest gemindert werden.

Zwei weitere Möglichkeiten, um einem Einsinken des Klebstoffs in einen Klebebandträger entgegenzuwirken, sind in der EP 2 722 374 B1 beschrieben.

Es wird dort zum Einen ausgeführt, dass der Klebstoff insbesondere in einem drucklosen Beschichtungsverfahren, wie dem sogenannten "Curtain-Coating-Verfahren", aufgebracht werden kann. Gemäß diesem Verfahren fällt ein geschlossener Klebstofffilm auf das Substrat. Dadurch wird eine gleichmäßige Dicke und Grammatur der Klebstoffschicht erreicht. Es wird nur so viel Klebstoff aufgetragen, wie unbedingt benötigt wird.

Auch in der EP 1 448 744 A1 wird beschrieben, dass der Verbund aus dem als Substrat bezeichneten Träger und einer Haftklebemasse u. a. dadurch hergestellt werden kann, dass die aufzutragende Haftklebemasse zunächst auf ein dehäsives Medium gebracht wird und dort einen Film ausbildet, wobei der Klebstofffilm im Anschluss daran im Kaschierverfahren auf den Träger übertragen wird. Es wird jedoch darauf hingewiesen, dass die Mehrfachbeschichtung unter Einsatz eines solchen Kaschierverfahrens das Problem einer geringen Maßgenauigkeit aufweist, wenn ein Klebstoffstrich auf einen vorhergegangenen aufgebracht wird.

Zum Anderen wird in der EP 2 722 374 B1 ausgeführt, dass, um beim Auftragen eines Klebstoffes mit niedriger Viskosität einen Klebstoffdurchschlag durch den Träger zu verhindern, eine Kalandrierung des Trägers vorgenommen werden kann, wodurch eine Verringerung der Permeabilität des Gewebes für den Klebstoff herbeigeführt werden kann. Dies kommt dann dadurch zum Ausdruck, dass - ähnlich wie bei der EP 2 520 629 A1 - die Luftdurchlässigkeit des kalandrierten Trägers - gemessen nach DIN 53 887 bei einem Prüfdruck von 500 Pa - geringer ist als 200 l/m²s und/oder bei einer Messung unter einem Prüfdruck von 200 Pa geringer ist als 100 l/m²s.

Auch für Vliesträger wird in der DE 102 59 682 A1 eine thermische Verfestigung der Oberfläche eines Klebebandträgers beschrieben, wobei der Träger danach insbesondere eine Struktur aufweisen kann, wie sie durch eine Kalandrierung mit einer Prägewalze entsteht, die eine Prägefläche von 10 % bis 30 % aufweist. Der Klebstoff wird dann auf die auf diese Weise erzeugte vergleichsweise glatte Oberfläche aufgetragen.

Sowohl das oben genannte Chintzen als auch eine Trägerverdichtung durch Kalandrieren stellen zusätzliche Bearbeitungsschritte dar, die den Herstellungsaufwand des Klebebandes erhöhen.

In der EP 1 136 535 A2 wird ein Klebeband zum Ummanteln von beispielsweise Kabeln in Automobilen, Rohren oder dergleichen zumeist langgestreckten Objekten, beschrieben, mit einem Trägerband auf Veloursbasis, und mit einer wenigstens bereichsweise auf das Trägerband aufgebrachten Kleberbeschichtung, wobei eine Trägerverdichtung dadurch erfolgt, dass zwischen Kleberbeschichtung und Trägerband eine das Velours verfestigende, nichttextile Maschengrundschicht angeordnet ist.

Eine weitere Möglichkeit der Steuerung der Penetration des Klebstoffs in den Träger besteht darin, bei der Auftragung eine hochviskose Masse einzusetzen, was jedoch den Auftragungsprozess nachteiligerweise verzögern kann.

In der EP 2 322 385 B1 ist bekanntermaßen bei einem Träger eines gleichzeitig einerseits quereinreißbaren und andererseits hoch abriebfesten Gewebeklebebandes vorgesehen, dass eine auf die Breite bezogene Fadenstärke der Kettfäden des Gewebes 2.000 bis 4.000 dtex/cm beträgt und eine auf die Länge bezogene Fadenstärke der Schussfäden des Gewebes 8.000 bis 20.000 dtex/cm beträgt und/oder dass die Fadenstärke (Titer) in dtex der Schussfäden größer als 400 ist. Hierbei kann erreicht werden, dass die Klebebeschichtung auf den Kettfäden und den Schussfäden, insbesondere an deren Kreuzungsstellen, im Wesentlichen nur oberflächlich aufliegt. Allerdings werden dabei nachteiligerweise - wie in der EP 2 322 385 B1 beansprucht - bestimmte Anforderungen an den Träger gestellt, die beispielsweise durch Vliesträger oder gewirkte Träger, wenn diese in einem Kabelwickelband der eingangs genannten Art eingesetzt werden sollen, nicht erfüllbar sind.

Das deutsche Gebrauchsmuster DE 20 2004 019 761 U1 offenbart ein Kabelwickelband der eingangs genannten Art mit einem textilen Träger, der auf einer Seite mit einer Klebeschicht versehen ist, die zwei Teilschichten umfasst, von denen die erste Teilschicht als Beschichtung bezeichnet wird, und eine Polyurethanmasse, die unmittelbar am Träger angeordnet ist, so dass sie dessen Poren verschließt. Die zweite Teilschicht liegt auf der ersten Teilschicht auf und ist ein Haftklebstoff. Das Ziel ist dabei die Herstellung eines mediendichten Trägers. In einem Beispiel beträgt das Flächengewicht der Beschichtung mit 100 g/m² 50 % des spezifischen Flächengewichts eines PET-Nähvlies-Trägers (200 g/m²). Für die Flexibilität der beschichteten Materialien ist dabei neben der Zusammensetzung des Polyurethans und dem Aufbau des Textils die Eindringtiefe der Beschichtung in den Träger von großer Bedeutung. Die Eindringtiefe ist abhängig von der Art des Beschichtungsverfahrens und dem Material des Trägers. Ein Material für die Beschichtung mit vergleichsweise niedriger Viskosität dringt bei der Auftragung mit einem bestimmten anteiligen Flächengewicht von Beschichtung und Träger tiefer in den Träger ein als ein höher viskoses Material mit dem gleichen anteiligen Flächengewicht von Beschichtung und Träger. Die Viskosität kann dabei beispielsweise in der Schmelze über die Temperatur eingestellt werden. Bei einem dicken porösen Träger ist bei gleichem anteiligen Flächengewicht von Beschichtung und Träger mit einer anderen prozentualen Eindringtiefe zu rechnen als bei einem dünneren, ggf. verdichteten Träger. Auch die Benetzbarkeit des jeweiligen textilen Trägermaterials durch das PUR-Material der Beschichtung spielt eine Rolle.

Die EP 2 045 303 A1 offenbart ein Kabelwickelband der eingangs genannten Art mit einem Polyethylenterephthalat-Gewebeträger, der auf einer Seite mit einer Klebeschicht versehen ist, die zwei Teilschichten umfasst, von denen die erste Teilschicht als polymere Beschichtung bezeichnet wird, ein Flächengewicht im Bereich von 5 bis 30 g/m² aufweist und unmittelbar am Träger angeordnet ist, so dass sie die Poren des Trägers verschließt. Die zweite Teilschicht liegt auf der ersten Teilschicht auf und ist ein Haftklebstoff. In dort genannten Beispielen beträgt das Flächengewicht der Beschichtung weniger als 50 % des spezifischen Flächengewichts des Gewebeträgers. Für die polymere Beschichtung nennt das Dokument außer PUR (wie in der DE 20 2004 019 761 U1) konkret auch noch Acryl- oder Silikonpolymere als Beispiele für Polymere, die den Abriebwiderstand des Polyesterträgers verbessern, was das Ziel des Anmeldegegenstandes ist.

Der Erfindung liegt das Problem zugrunde, ein Klebeband der eingangs genannten Art zu schaffen, das einerseits eine jeweils, insbesondere für Kabelwickelbänder, geforderte Klebkraft nach der Norm LV 312, aufweist, das aber andererseits mit minimalem technologischen Aufwand und in materialökonomischer Weise herstellbar ist, ohne dass dafür der poröse Träger einer besonderen Vorbehandlung unterworfen oder an ihn und/oder das Klebstoffauftragsverfahren besondere Anforderungen gestellt werden müssten. Darüber hinaus soll insbesondere hinsichtlich der weiteren geforderten Gebrauchseigenschaften des Klebebandes, wie der manuellen und maschinellen Verarbeitbarkeit, die mit dem Abflaggverhalten verbunden ist, oder wie auch des Abriebs und der Geräuschdämpfung, keine negative Beeinträchtigung erfolgen.

Das der Erfindung zugrunde liegende Problem wird dadurch gelöst, dass die erste Teilschicht aus einem polymeren klebenden oder nichtklebenden ersten Material besteht, welches mit einem derartigen spezifischen Mindest-Flächengewicht aufgetragen ist, dass das Material zumindest die Poren des Trägers, dessen Luftdurchlässigkeit - gemessen nach DIN 53 887 - bei einem Prüfdruck von 500 Pa größer ist als 200 l/m²s und/oder bei einer Messung unter einem Prüfdruck von 200 Pa größer ist als 100 l/m²s, oberflächlich verschließt, wobei das spezifische Höchst-Flächengewicht des ersten Materials nicht größer ist als 70 % der spezifische Masse des Trägers, und dass die zweite Teilschicht aus einem polymeren selbstklebenden zweiten Material besteht, wobei ein polymeres nichtklebendes Material der ersten Teilschicht ausgewählt ist aus den Gruppen Ethyl-Vinylacetate (EVA) mit einem Vinylacetat-Anteil im Bereich von 10 - 50 Masse-%, Ethylen-Propylen-Copolymere mit einem Ethylen-Anteil von im Bereich von 5 - 20 Masse-%, mit Maleinsäureanhydrid oder mit Silan modifizierte Polypropylene, Polyolefin-Elastomere, olefinische Block-Copolymere, amorphe Poly-Alpha-Olefine, Polyamid-Hotmelts, oder wobei ein polymeres klebendes Material der ersten Teilschicht und/oder der zweiten Teilschicht ein druckempfindlicher Haftklebstoff ist, welcher ein natürlicher oder ein synthetischer Kautschuk oder welcher ein Acrylatklebstoff ist, wobei eine Eindringtiefe des Materials der ersten Teilschicht in den Träger im Bereich von bis zu 85 % bezogen auf die Dicke des Trägers liegt.

Ein derartiges Klebeband ist nach einem erfindungsgemäßen Verfahren gemäß Anspruch 13 herstellbar.

Ein großer Vorteil der Erfindung besteht dabei darin, dass - im Gegensatz zu den vorstehend beschriebenen, aus dem Stand der Technik bekannten Maßnahmen - keinerlei Restriktionen hinsichtlich der Art und Beschaffenheit sowohl des Trägers - abgesehen von dessen erfindungsgemäßer Luftdurchlässigkeit -, als auch des Beschichtungsverfahrens gestellt werden müssen, wenngleich die eingangs erwähnten technischen Maßnahmen nicht zwingend inkompatibel mit der Erfindung sind.

So wird erfindungsgemäß ein Eindringen des Materials der ersten Teilschicht in den offenen Träger zugelassen, wobei die Luftdurchlässigkeit des Trägers, gemessen nach DIN 53 887 bei einem Prüfdruck von 500 Pa, größer ist als 200 l/m²s. Bei einer Messung unter einem Prüfdruck von 200 Pa ist sie größer als 100 l/m²s.

Textile Träger können ohne eine ihrer Verdichtung dienende Vorbehandlung eingesetzt werden, wobei die Klebstoffe in bekannter Weise aus einer Lösung unter Zusatz von Lösungsmitteln oder - nach Erwärmung - aus einer Schmelze im Extrusionsverfahren auf den Träger aufgebracht werden können. Übliche Beschichtungsmethoden sind dabei das Aufstreichen, Rakeln, Aufwalzen oder Extrudieren des Klebstoffs. Beim Walzenauftrag wird der insbesondere durch Schmelzen verflüssigte Klebstoff über ein beheiztes Walzensystem dosiert und in der gewünschten Schichtdicke bzw. Grammatur aufgetragen. Bei einem Düsenauftrag wird der Klebstoff mittels einer Pumpe durch eine Breitschlitzdüse (GID-Düse) gedrückt. Eine GID-Düse arbeitet nach dem Prinzip der "Cuette"-Strömung. Hierdurch wird durch die bewegte Warenbahn durch Schleppströmung bei niedrigem Druckniveau so viel Masse abgeführt, wie durch eine Pumpe zugeführt wird. Hierdurch wird der hydraulische Druckaufbau im Beschichtungsspalt bei jeder Beschichtungsbreite und Maschinengeschwindigkeit konstant gehalten.

Außer den bereits erwähnten drucklosen Beschichtungsverfahren, wie dem "Curtain-Coating-Prozess", der jedoch vorteilhafterweise erfindungsgemäß - insbesondere für die erste Teilschicht - nicht eingesetzt werden muss, kann auch ein Aufsprühen zur Klebstoffapplikation eingesetzt werden, wobei die genannten Verfahren und Methoden bedarfsweise auch miteinander in geeigneter Weise kombiniert werden können. Damit ist eine hohe fertigungstechnische Flexibilität gegeben. So ist es beispielsweise möglich, den ersten Klebstoff als Lösung aufzusprühen und den zweiten Klebstoff als Schmelze oder auch in umgekehrter Reihenfolge mittels Walzen oder Rakeln auf das Substrat aufzutragen. Allerdings sollten lösungsmittelhaltige Klebemassen nicht nach der - im Rahmen der Erfindung grundsätzlich möglichen - Auftragung Nass-in-Nass, sondern nur nach vorheriger Zwischenaushärtung in der ersten Teilschicht vorgesehen werden, wenn die zweite Teilschicht aus einer Schmelze oder einem anderen lösungsmittelfreien System besteht.

Erfindungsgemäß erfolgt eine Beschichtung des Trägers mit zwei Systemen, wobei durch das polymere klebende oder nichtklebende Material eine "Versiegelung" des textilen Trägermaterials erzielt wird und dann eine Überbeschichtung der ersten Teilschicht mit einem selbstklebenden Material erfolgt. Unter "selbstklebend" wird dabei insbesondere verstanden, dass das Material aus einem druckempfindlichen Haftkleber (englisch: Pressure Sensitive Adhesive - PSA) besteht.

Sofern also die erste Teilschicht bereits aus einem klebenden Material besteht, kann dies in der zweiten Teilschicht ein ähnlicher oder auch ganz anderer Klebstoff sein. Im Ergebnis erhält man entweder einen neuartigen Gesamtaufbau oder eine Kombination von zwei Klebstofffamilien, welche die jeweils vorteilhaften Eigenschaften der Einzelklebstoffe gemeinsam aufweist - z. B. eine Kombination der Medien- und/oder der Temperaturbeständigkeit, die sich durch den Einsatz von Acrylatklebstoffen ergeben, mit der hohen Anfangsklebrigkeit, die durch den Einsatz von Kautschuk-Hotmelts erzielt werden kann.

Sofern die erste Teilschicht aus einem nichtklebenden Material besteht, und die zweite Teilschicht die notwendige selbstklebende Eigenschaft des Klebebandes gewährleistet, erhält man neuartige Klebebandkonstruktionen mit einem Eigenschaftsbild, welches auf andere Weise gar nicht oder nur mit hohem technischen Aufwand herzustellen wären. Durch die Präsenz der polymeren, nichtklebenden ersten Zwischenschicht, die sich in ihrer chemischen Natur von der eines Haftklebstoffes unterscheidet, kann der Anteil an verwendetem Haftklebstoff unter Beibehaltung der haftklebenden Eigenschaften reduziert werden, da durch die erste Teilschicht verhindert wird, dass der Haftklebstoff in der Oberfläche des textilen Trägers versinkt und nicht mehr aktiv zur Verfügung steht. Des Weiteren kann vorteilhafterweise unter Beibehaltung der klebtechnischen Eigenschaften noch eine Verbesserung des spezifischen Eigenschaftsprofils im Hinblick z. B. auf die Abriebbeständigkeit und die Medienbeständigkeit erzielt werden.

Durch die Erfindung gelingt es im Vergleich zu einer nicht aus Teilschichten bestehenden Klebstoffschicht (wie gemäß der EP 2 050 802 A1), einerseits die Menge eines möglichenfalls kostenintensiven Klebstoffs zu minimieren und durch alternative Materialien weitgehend zu ersetzen, und andererseits bei Kombination von verschiedenen Klebstoffsystemen neue technische Eigenschaften zu erzielen.

Was die Klebstoffbeschichtung betrifft, so können im Rahmen der Erfindung in besonderer Ausführung sowohl in der ersten Teilschicht, falls diese aus einem klebenden Material besteht, als auch in jedem Fall, insbesondere aber wenn die erste Teilschicht nichtklebend ist, in der zweiten Teilschicht lösungsmittelfreie UV-vernetzbare Acrylatklebstoffe als druckempfindliche Haftklebstoffe eingesetzt werden. Dies trägt dazu bei, dass sich das erfindungsgemäße Klebeband durch eine hohe Resistenz gegen verschiedene Chemikalieneinflüsse, eine außerordentlich hohe Beständigkeit gegenüber Alterungsprozessen und durch eine ausgezeichnete Kompatibilität mit den verschiedensten zu verklebenden Bauteilen auszeichnet. Derartige UV-vernetzbare Schmelz-Haftklebstoffe (HMPSA - Hot Melt Pressure Sensitive Adhesive), bei denen ein Fotoinitiator einpolymerisiert sein kann, werden beispielsweise in verschiedenen Ausführungsarten unter dem Namen acResin^{®} von der BASF im Handel vertrieben. Sie können bei Temperaturen von 120 °C auf herkömmlichen Hotmelt-Coatern verarbeitet werden, die zusätzlich mit UV-Lampen ausgestattet sind. Spezielle Trocknungsanlagen sind nicht erforderlich. Im Vergleich mit lösungsmittelhaltigen Acrylatklebern, die jedoch ebenfalls einsetzbar sind, weist eine Klebebeschichtung auf der Basis derartiger Haftklebstoffe wegen der darin enthaltenen minimalen Menge von migrationsfähigen Inhaltsstoffen nur eine geringe Ausgasung flüchtiger Substanzen auf.

Auch können im Rahmen der Erfindung in weiterer besonderer Ausführung sowohl in der ersten Teilschicht, falls diese aus einem klebenden Material besteht, als auch in jedem Fall, insbesondere aber wenn die erste Teilschicht nichtklebend ist, in der zweiten Teilschicht synthetische Kautschuk-Schmelzklebstoffe eingesetzt werden, die gegenüber lösemittelhaltigen Klebstoffen oder Dispersionsklebstoffen den Vorteil einer vergleichsweise hohen Beschichtungsviskosität aufweisen. Dies verhindert ein zu starkes Eindringen bzw. Durchdringen des Trägers, was insbesondere bei Vliesträgern von Bedeutung ist, weil ein zu tiefes Eindringen dort die Gefahr eines Verblockens beim Aufrollen des Bandes erhöhen würde.

Unter diesem Gesichtspunkt ist festzustellen, dass eine Eindringtiefe des Materials der ersten Teilschicht in den Träger gemäß dem erfindungsgemäßen Verfahren im Bereich von 5 % bis 85 %, vorzugsweise von 10 % bis 50 %, besonders bevorzugt von 15 % bis 30 % der Dicke Trägers liegen sollte.

Im Hinblick auf das spezifische Flächengewicht ist - ebenso unter diesem Aspekt - festzustellen, dass das spezifische Höchst-Flächengewicht des Materials der ersten Teilschicht bevorzugt mit Vorteil nicht größer als 50 %, besonders bevorzugt nicht größer als 40 %, der spezifischen Masse des Trägers sein sollte. Ein Durchschlagen des Klebstoffs auf die andere Trägerseite, die den Bandrücken bildet, kommt dann nicht vor.

Das spezifische Mindest-Flächengewicht des Materials der ersten Teilschicht sollte für den Porenverschluss und eine optimal hohe Verankerung des Klebstoffs im Träger günstigerweise nicht kleiner als 5 % der spezifischen Masse des Trägers sein und vorzugsweise in einem Bereich von 15 % bis 30 % der spezifischen Masse des Trägers liegen.

Als eine in der ersten oder zweiten Teilschicht bevorzugt einsetzbare Schmelzklebebeschichtung (HMPSA - Hot Melt Pressure Sensitive Adhesive) kann beispielsweise eine Mischung mit folgender Rezeptur Verwendung finden, als deren Basis bevorzugt ein synthetischer Kautschuk aus einem Styrol-Butadien- (SBS) oder einem Styrol-Isopren- (SIS) Blockcopolymer dient:
- 30 - 55 %, vorzugsweise 40 - 50 %, eines Synthesekautschuks, insbesondere eines SIS- oder SBS-Blockcopolymers,
- 25 - 50 %, vorzugsweise 30 - 40 %, eines synthetischen Harzes mit einem Erweichungspunkt von 80 - 120 °C,
- 0 - 20 %, vorzugsweise 0 - 10 %, eines synthetischen Harzes mit einem Erweichungspunkt von 0 - 20 °C,
- 0 - 20 %, vorzugsweise 0 - 10 %, eines Mineralöls als Weichmacher,
- 0 - 30 % Kreide als Füllstoff,
- 0 - 20 %, vorzugsweise 0 - 10 %, eines flüssigen Polyisoprens,
- 0 - 5 % Alterungsschutzmittel.

Die Konstituenten der Rezeptur - wenn vorhanden - sind dabei so gewählt, dass sie zusammen 100 % ergeben.

Als polymere nichtklebende Materialien der ersten Teilschicht kommen erfindungsgemäß folgende zur Verwendung:
- Ethyl-Vinylacetate (EVA) mit einem Vinylacetat-Anteil im Bereich von 10 - 50 Masse-% (beispielsweise Escorene^{™} Ultra UL 53019CC von Exxon Mobil),
- Ethylen-Propylen-Copolymere (E/P) mit einem Ethylen-Anteil im Bereich von 5 - 20 Masse-% (beispielsweise: Vistamaxx^{™} 8880 von Exxon Mobil; Amplify^{™} VA 400 von Dow^{®} Chemical, Licocene^{®} PP 2602 von Clariant),
- mit Maleinsäureanhydrid (MAH) oder mit Silan (SI PP) modifizierte Polypropylene (beispielsweise Licocene^{®} PP MA 6252 oder Licocene^{®} PP Si 1362 von Clariant),
- Polyolefin-Elastomere (beispielsweise aus den Gruppen Engage^{™} oder Affinity^{™} von DOW^{®} Chemical),
- Olefinische Block-Copolymere (beispielsweise aus der Gruppe Infuse^{™} von DOW^{®} Chemical),
- Amorphe Poly-Alpha-Olefine APAO (beispielsweise Vestoplast^{®} 828 von Evonik Industries),
- Polyamid-Hotmelts (beispielsweise aus der Gruppe Uni-Rez^{™} von Arizona Chemical bzw. Kraton Polymers).

Der textile Träger kann ein Gewebe, Gewirke, ein Vlies oder ein daraus gebildeter Verbund sein. Eine hohe Abriebfestigkeit des erfindungsgemäßen Klebebandes kann durch den Einsatz von speziellen Kunstfasern erreicht werden. Bevorzugt werden Polyester-, insbesondere PET- (Polyethylenterephthalat-)Fasern, und Polyamid- (PA-)Fasern gewählt. Der Träger kann also insbesondere vollständig aus einem Polyestergewebe, insbesondere aus PET (Polyethylenterephthalat), bestehen. Eine andere, insbesondere unter dem Gesichtspunkt einer hohen Geräuschdämpfung optimale, Alternative besteht darin, dass der Träger vollständig aus einem Vlies, insbesondere aus einem Polyesternähvlies, besteht.

Das spezifische Flächengewicht des Trägers kann - auch in Abhängigkeit davon, ob es sich z. B. um ein Gewirke, ein Gewebe oder ein Vlies handelt - in einem weiten Bereich - beispielsweise von 15 g/m² bis 500 g/m² variieren, wobei als ein für Kabelwickelbänder charakteristischer Bereich sich von 50 g/m² bis 250 g/m² erstreckt.

Weitere vorteilhafte Ausführungen der Erfindung sind in den Unteransprüchen und in der nachfolgenden speziellen Beschreibung enthalten.

Die nachstehenden Tabellen 2 bis 4 enthalten zwei Vergleichsbeispiele und insgesamt acht Ausführungsbeispiele zu erfindungsgemäßen Kabelwickelband-Ausführungen. Hierbei wurden jeweils auf PET-Gewebe-Träger mit einem Flächengewicht im Bereich von 122 g/m² bis 138 g/m² ein Synthesekautschuk- oder ein Acrylat-Haftschmelzklebstoff (HMPSA) in der zweiten Teilschicht in der Klebeschicht aufgetragen. Die Luftdurchlässigkeit des Trägers, gemessen nach DIN 53 887 bei einem Prüfdruck von 500 Pa, war (vor der Auftragung) jeweils größer als 200 l/m²s und bei einer Messung unter einem Prüfdruck von 200 Pa größer als 100 l/m²s. In den jeweiligen Vergleichsbeispielen wurden keine Teilschichten vorgesehen. Die Auftragung der Teilschichten erfolgte im Rahmen einer sogenannten Inline-Fertigung hintereinander durch jeweils eine Düse mit jeweils anschließender Verrakelung. Danach erfolgte eine integrale Trocknung und/oder Vernetzung, vorzugsweise unter UV-Bestrahlung, der Klebeschicht sowie eine anschließende Abkühlung in einem kontinuierlichen Prozess von Rolle zu Rolle.

Die Parameter der verschiedenen Klebebandausführungen wurden nach den Normvorschriften der LV 312 bestimmt, wobei die Angaben in den einzelnen Feldern der Tabellen 2 bis 4 Mittelwerte aus mehreren Messungen sind, von denen die Einzelwerte um durchschnittlich bis zu 20 % nach oben und nach unten abweichen konnten.

In der LV 312 sind für einzelne Prüfverfahren z. T. Verweise auf andere Normen enthalten. Dies sind für das jeweilige Flächengewicht von Träger, Klebeband und Klebstoffauftragsgewicht die EN ISO 2286-2:2016, für die Materialdicke von Träger und Klebeband die DIN EN 1942:2008-06, für die Klebkraft auf Stahl und auf dem Bandrücken die DIN EN 1939:2003-12 und für die die mechanischen Werte Bruchkraft und Reißdehnung die DIN EN 14410:2003-06.

**Tabelle 1: Einteilung der Abriebklassen nach LV 312**

| Abriebklasse | Anforderung am 5 mm Dorn |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | ≥ 5000 - 14999 Hübe |
| F extrem hoher Abriebschutz | ≥ 15.000 Hübe |

Die Abriebbeständigkeit wurde dabei gemäß der LV 312 in Anlehnung an die DIN ISO 6722 bestimmt, indem das Klebeband zunächst auf einen Dorn (Metallstab) mit 5 mm Durchmesser aufgeklebt wird. Mit einem Schabwerkzeug, das einen Nadeldurchmesser von 0,45 mm aufweist, wird dann unter einer Gewichtskraft von 7 N die Anzahl der Hübe bestimmt, die benötigt wird, um das Klebeband durchzuscheuern. Hinsichtlich der Abriebbeständigkeit ist dabei in der LV 312 die in der vorstehenden Tabelle 1 wiedergegebene Klassifizierung vorgesehen.

In der Tabelle 2 sind die Parameter aufgeführt, die sich jeweils bei klebenden Materialien in den ersten Teilschichten der Klebeschicht ergaben.

**Tabelle 2: Beispiele 1 und 2 (4. und 6. Tabellenspalte) - Kabelwickelband-Ausführungen mit PET-Gewebe-Träger und mit klebenden Materialien in beiden Teilschichten der Klebeschicht**

| Klebstofffilm (Teilschichten 1 und 2) | 1 | Vergleich | Acrylat HMPSA 42 g/m² | Vergleich | Kautschuk HMPSA 50 g/m² |
|---|---|---|---|---|---|
| | | KautschukHMPSA 85 g/m² | | AcrylatHMPSA 80g/m² | |
| | 2 | | Kautschuk HMPSA 45 g/m² | | Acrylat HMPSA 40 g/m² |
| Flächengewicht | g/m ² | 215 | 213 | 204 | 215 |
| Klebebanddicke | mm | 0,231 | 0,230 | 0,223 | 0,240 |
| Klebkraft Stahl | N/cm | 4,4 | 5,2 | 12* | 6,7 |
| Klebkraft Bandrücken | N/cm | 4,2 | 3,6 | 5,4 | 5,3 |
| Bruchkraft | N/cm | 267 | 260 | 243 | 258 |
| Reißdehnung | % | 49 | 53 | 53 | 50 |
| Abrieb | Hübe | 555 | 1075 | 1168 | 490 |

Aus Tabelle 2 geht dabei hervor, dass bei Ersatz von - im Rahmen der Auftragungsgenauigkeit - 50 % des jeweiligen Klebstoffs in den Vergleichsbeispielen der Spalten 3 und 5 durch den jeweils anderen Klebstoff (Spalten 4 und 6) das Flächengewicht und die Klebebanddicke etwa gleich bleiben.

Die erfindungsgemäßen Klebebänder zeigten darüber hinaus in einem Fall vorteilhafterweise einen Anstieg der Abriebfestigkeit auf die doppelte Anzahl von Hüben bis zum Durchrieb. Nach der Klassifizierung gemäß der LV 312 wurde somit ein hoher Abriebschutz, insbesondere der Klasse D, erreicht. Bei einem Vergleich von Spalten 3 und 4 der Tabelle 1 zeigt sich, dass das erfindungsgemäße Klebeband sogar in eine höhere Abriebklasse eingestuft werden kann.

Die Markierung der Klebkraft auf Stahl mit * zeigt an, dass hier bei der Prüfung ein kohäsives Bruchbild auftrat. Bei Haftklebstoffen mit einer geringen Kohäsion kann bei mechanischen Belastungen innerhalb der Klebstoffschicht ein derartiger Bruch auftreten, d. h. es verbleiben Klebstoffreste auf beiden zu verbindenden Substratoberflächen. Es handelt sich folglich um eine räumliche Trennung der Makromoleküle innerhalb der Klebstoffschicht, nicht um eine Bestimmung der Adhäsion an der Stahlplatte.

Anmeldungsgemäß wird - wie in Fachkreisen üblich - unter moderater Klebkraft eine Klebkraft im Bereich von 0,5 N/cm bis 4,0 N/cm nach DIN EN 1939 verstanden, unter erhöhter Klebkraft eine Klebkraft im Bereich von 4,0 N/cm bis 10,0 N/cm nach DIN EN 1939. Die erfindungsgemäßen Ausführungen zeigen somit eine erhöhte Klebkraft auf Stahl.

In den Tabelle 3 und 4 sind die Parameter aufgeführt, welche sich jeweils bei nichtklebenden Materialien in den ersten Teilschichten der Klebeschicht ergaben.

Aus Tabelle 3 geht ebenfalls hervor, dass zwar in den erfindungsgemäßen Ausführungen des Klebebandes (Spalten 4 bis 6) ein kleinerer oder größerer Abfall der Klebkraft auf Stahl gegenüber einer reinen Kautschukklebeschicht auftritt, dass aber die für Kabelwickelbänder geforderte Klebkraft nach der Norm LV 312 von 1,5 N/cm in jedem Fall eingehalten wird.

**Tabelle 3: Beispiele 3 bis 5 (4. bis 6. Tabellenspalte) - Kabelwickelband-Ausführungen mit PET-Gewebe-Träger und mit Synthesekautschuk-Haftschmelzklebstoff (HMPSA) in der zweiten Teilschicht sowie mit nichtklebender erster Teilschicht der Klebeschicht**

| Klebstofffilm (Teilschichten 1 und 2) | 1 | Vergleich | APAO 42g/m² | EVA 45g/m² | E/P 45g/m² |
|---|---|---|---|---|---|
| | 2 | Kautschuk HMPSA 85 g/m² | Kautschuk HMPSA 44 g/m² | Kautschuk HMPSA 45 g/m² | Kautschuk HMPSA 45 g/m² |
| Flächengewicht | g/m² | 215 | 198 | 222 | 244 |
| Klebebanddicke | mm | 0,23 | 0,24 | 0,24 | 0,23 |
| Klebkraft Stahl | N/cm | 4,4 | 2,1 | 3,2 | 4,0 |
| Klebkraft Bandrücken | N/cm | 4,2 | 0,8 | 2,1 | 1,7 |
| Bruchkraft | N/cm | 267 | 276 | 279 | 247 |
| Reißdehnung | % | 49 | 44 | 46 | 45 |
| Abrieb | Hübe | 554 | 1438 | 2684 | 1225 |

Ein erfindungsgemäßer Abfall der Klebkraft auf dem Bandrücken ist nicht nur im Rahmen der sich einstellenden Werte tolerabel, sondern erhöht vorteilhafterweise die Montagefähigkeit eines erfindungsgemäßen Bandes.

Die erfindungsgemäßen Klebebänder zeigen darüber hinaus einen Anstieg der Abriebfestigkeit auf bis zum etwa fünffachen Wert von Hüben bis zum Durchrieb (Spalte 5). Nach der Klassifizierung gemäß der LV 312 wurde somit in allen Fällen eine höhere Abriebklasse (Klasse D statt C) erreicht.

**Tabelle 4: Beispiele 6 bis 8 (4. bis 6. Tabellenspalte) - Kabelwickelband-Ausführungen mit PET-Gewebe-Träger und mit Acrylat-Haftschmelzklebstoff (HMPSA) in der zweiten Teilschicht sowie mit nichtklebender erster Teilschicht der Klebeschicht**

| Klebstofffilm (Teilschichten 1 und 2) | 1 | Vergleich | EVA 45g/m² | E/P 45g/m² | SI PP 45g/m² |
|---|---|---|---|---|---|
| | 2 | Acrylat HMPSA 80 g/m² | Acrylat HMPSA 40 g/m² | Acrylat HMPSA 40 g/m² | Acrylat HMPSA 45 g/m² |
| Flächengewicht | g/m² | 204 | 215 | 207 | 212 |
| Klebebanddicke | mm | 0,23 | 0,24 | 0,25 | 0,23 |
| Klebkraft Stahl | N/cm | 12* | 4,7 | 8,5* | 6,4* |
| Klebkraft Bandrücken | N/cm | 5,4 | 1,9 | 2,8 | 1,3 |
| Bruchkraft | N/cm | 243 | 241 | 280 | 253 |
| Reißdehnung | % | 53 | 41 | 39 | 54 |
| Abrieb | Hübe | 1168 | 2748 | 1133 | 1460 |

Aus Tabelle 4 geht hervor, dass die erfindungsgemäßen Klebebandausführungen mit Acrylat-Haftschmelzklebstoff (HMPSA) in der zweiten Teilschicht sowie mit nichtklebender erster Teilschicht der Klebeschicht tendenziell die gleichen vorteilhaften Eigenschaften zeigten, wie die mit Synthesekautschuk-Haftschmelzklebstoff (HMPSA) in der zweiten Teilschicht und mit nichtklebender erster Teilschicht. Alle Klebebandausführungen konnten in die Abriebklasse D eingestuft werden.

Auch hier zeigen sämtliche erfindungsgemäßen Ausführungen eine erhöhte Klebkraft auf Stahl, wobei allerdings die Markierung mit * darauf hinweist, dass wiederum bei der Prüfung teilweise ein kohäsives Bruchbild auftrat.

Zu den weiteren mechanischen, normgemäß entsprechend der LV 312 zu ermittelnden Gebrauchseigenschaften Reißdehnung und Bruchkraft ist festzustellen, dass diese - wie ebenfalls aus den Tabellen 2 bis 4 hervorgeht - keine Änderungen aufwiesen, die für die Verwendung als Kabelwickelbänder signifikant wären.

Schließlich zeigte sich, dass die nach LV 312 bestimmte Medienbeständigkeit gegenüber Diesel und Benzin insbesondere für die in den Spalten 4 und 5 der Tabelle 4 aufgeführten Ausführungen vorteilhafterweise deutlich zunahm. Diese Medienbeständigkeit blieb für die Ausführung in der Spalte 6 auf dem gleichen Niveau, wobei sich diese Ausführung auf ein erfindungsgemäßes Klebeband mit einer ersten Teilschicht bezieht, die aus mit Silan modifiziertem Polypropylen (SI PP) bestand.

Die Erfindung ist nicht auf die dargestellten Ausführungsbeispiele beschränkt, sondern umfasst im Rahmen der Ansprüche auch alle im Sinne der Erfindung gleichwirkenden Ausführungen und Verwendungen. So ist eine doppelseitige Klebebeschichtung des Trägers zwar primär nicht intendiert, jedoch fällt auch ein Klebeband mit einer solchen in den Bereich der Erfindung. Hier kann dann auch beidseitig auf der Trägeroberfläche die erfindungsgemäß vorgesehene Doppelklebeschicht aufgetragen werden.

Das erfindungsgemäße Klebeband bzw. Klebematerial kann in geeigneter Ausführung, beispielsweise nicht bandförmig, sondern als Stanzteil, außer - wie bevorzugt - zum Umwickeln von Kabeln in vorteilhafter Weise auch zur Verklebung von Profilen, Kanälen, Gehäusen oder Halteteilen eingesetzt werden, insofern der dafür maßgebliche Parameter "Klebkraft auf Stahl" dies durch das Erreichen eines dafür erforderlichen Wertes anzeigt. Beispielsweise liegt dieser bei einer Kombination eines Ethylen-Propylen-Copolymerisats (E/P) in der ersten Teilschicht und einem druckempfindlichen Acrylat-Hotmelt-Kleber (HMPSA) in der zweiten Teilschicht bei 8,5 N/cm.

Durch die erste Teilschicht erfolgt eine zumindest ausreichende bis exzellente Verankerung der erfindungsgemäßen Klebstoffschicht im Träger, wobei für das Flächengewicht der zweiten Teilschicht eine weitgehende Gestaltungsfreiheit gegeben ist. Zum Beispiel kann dieses im Sinne einer Klebkraftmaximierung erforderlichenfalls gegenüber dem Flächengewicht der ersten Teilschicht stark erhöht werden. Dies empfiehlt sich insbesondere dann, wenn das erfindungsgemäße Klebeband auf rauen Untergründen "aggressiv" kleben soll. So kann das Verhältnis des Flächengewichts der zweiten Teilschicht zum Flächengewicht der ersten Teilschicht im Bereich von 0,2 bis 10 : 1, insbesondere im Bereich von 0,7 bis 2 : 1, bevorzugt bei 1 : 1, liegen. Anders ausgedrückt liegt das Verhältnis des Flächengewichts der ersten Teilschicht zum Flächengewicht der zweiten Teilschicht besonders bevorzugt im Bereich von 1 : 3 bis 3 :1. Ein spezifisches Mindest-Flächengewicht der zweiten Teilschicht sollte bei 30 g/m² liegen.

Der Fachmann kann im Rahmen der Ansprüche, insbesondere im Hinblick auf die Auswahl des Trägers, Variationen vornehmen, ohne dass der Rahmen der Erfindung verlassen wird.

Wenn ein im Rahmen der Erfindung besonders bevorzugt einsetzbarer Träger aus einem Gewebe mit Fäden besteht, die sich einerseits als Längsfäden in Längsrichtung des Klebebandes und andererseits als Querfäden in Querrichtung des Klebebandes erstrecken, so kann bevorzugt ein auf die Breite bezogener Titer der Längsfäden kleiner als ein auf die Länge bezogener Titer der Querfäden sein, wobei der auf die Breite bezogene Titer der Längsfäden mindestens 2600 dtex/cm, vorzugsweise mindestens 2800 dtex/cm, besonders bevorzugt mindestens 2950 dtex/cm, und der auf die Länge bezogene Titer der Querfäden mindestens 4700 dtex/cm, vorzugsweise mindestens 5200 dtex/cm beträgt. Die Fadendichte der Querfäden kann wenigstens 18 Fäden pro Zentimeter Länge, vorzugsweise mindestens 28 Fäden pro Zentimeter Länge, besonders bevorzugt mindestens 30 Fäden pro Zentimeter Länge betragen. Die Fadendichte der Längsfäden kann im Bereich zwischen 30 und 50 Fäden pro Zentimeter Breite liegen. Die Stärke der Querfäden kann mindestens 150 dtex, vorzugsweise 160 bis 180 dtex, betragen. Die Stärke der Längsfäden kann mindestens 65 dtex betragen und vorzugsweise im Bereich von 80 dtex bis 100 dtex liegen. Die Längsfäden und die Querfäden können außer durch die Klebeschicht zusätzlich gegen eine Verschiebung relativ zueinander fixiert sein.

Hierzu kommen in Alleinstellung oder in Kombination folgende Möglichkeiten in Frage:
- dass die Fäden gegen eine Verschiebung durch den Einsatz von texturierten Garnen als Längsfäden und/oder Querfäden relativ zueinander fixiert sind,
- dass die Fäden gegen eine Verschiebung durch eine Kalandrierung des Trägers relativ zueinander fixiert sind,
- dass die Fäden gegen eine Verschiebung durch eine zusätzliche Acrylat- oder Polyurethanbeschichtung des Trägers relativ zueinander fixiert sind,
- dass die Fäden gegen eine Verschiebung durch eine Appretur des Trägers relativ zueinander fixiert sind.
- dass die Fäden gegen eine Verschiebung durch ein Intermingeln der - glatten oder texturierten - Fäden relativ zueinander fixiert sind oder dass die Fixation der Fäden durch ein Intermingeln erhöht ist.

Bei den Fäden kann es sich um Multifilamentfäden handeln, wobei insbesondere Längsfäden und Querfäden mit unterschiedlicher Filamentanzahl miteinander kombiniert sind. Die Längsfäden können dabei aus 16 bis 32 Filamenten pro Faden, vorzugsweise aus 22 bis 26 Filamenten pro Faden, bestehen. Die Querfäden können aus 28 bis 44 Filamenten pro Faden, vorzugsweise aus 34 bis 38 Filamenten pro Faden, bestehen. Ein Klebeband mit einem derartigen Träger ist im deutschen Gebrauchsmuster DE 20 2007 006 816 U1 beschrieben, auf das hinsichtlich weiterer Eigenschaften in vollem Umfang verwiesen wird.

Ein weiterer im Rahmen der vorliegenden Erfindung besonders bevorzugt einsetzbarer bandförmiger Klebeband-Gewebeträger ist in der EP 2 322 385 A1 beschrieben. Auch hier ist bevorzugt ein auf die Breite bezogener Titer der Längsfäden kleiner als ein auf die Länge bezogener Titer der Querfäden, wobei allerdings der auf die Breite bezogene Titer der Längsfäden im Bereich von 2.000 dtex/cm bis 4.000 dtex/cm liegt und der auf die Länge bezogene Titer der Schussfäden im Bereich von 8.000 dtex/cm bis 20.000 dtex/cm, vorzugsweise im Bereich von 8.000 dtex/cm bis 16.000 dtex/cm, besonders bevorzugt im Bereich von 9.000 dtex/cm bis 12.100 dtex/cm, insbesondere bei 11.000 dtex/cm. Die Fadenstärke der Schussfäden kann bevorzugt größer als 400 dtex sein und insbesondere bei 550 dtex liegen. Die Fadenstärke der Kettfäden kann größer oder gleich 50 dtex sein und insbesondere 55 dtex oder 84 dtex betragen. Der Schussfaden kann als Einzelfaden, aus zwei Einzelfäden - wobei der eine Einzelfaden eine Stärke von 220 dtex und der andere Einzelfaden eine Stärke von 330 dtex besitzt - oder aus drei bis fünf Einzelfäden gebildet sein, wobei die Stärke der einzelnen Einzelfäden jeweils 167 dtex beträgt. Die Anzahl der Schussfäden pro cm Bandlänge kann 16 bis 32, insbesondere 20 bis 24 betragen. Die Anzahl der Kettfäden pro cm Bandbreite 27 bis 60, insbesondere 35 bis 48 beträgt. Der Gewebeträger kann vollständig aus einem Polyester-Gewebe bestehen oder einen Polyesterkettfaden und einen Polyamidschussfaden besitzen. Die Kett- und/oder Schussfäden können aus Filamentgarnen bestehen und im Garnverwirbelungsverfahren (Intermingling) hergestellt sein. Sie können aus glatten und/oder texturierten Fäden bestehen. Die aus einzelnen Filamenten gebildeten Kett- und/oder Schussfäden können unterschiedliche Anzahlen von Filamenten besitzen. Dabei kann das Trägergewebe durch ein Kalandrieren verfestigt sein. Hinsichtlich weiterer Eigenschaften wird in vollem Umfang auf das genannte Dokument, insbesondere auf dessen Ausführungsbeispiele, verwiesen, wobei insbesondere die Vorteile des Vorhandenseins einer Quereinreißbarkeit der Bänder bei gleichzeitig hoher Abriebfestigkeit (Abriebklasse D nach LV 312) hervorzuheben ist. Wie bereits erwähnt, kann durch die im Rahmen der Erfindung vorgesehenen technischen Maßnahmen bei derartigen Klebebändern ein weiterer Anstieg der Abriebfestigkeit erreicht werden, wie bis auf den doppelten oder sogar fünffachen Wert von Hüben bis zum Durchrieb.

## Patentansprüche

1. Klebeband, insbesondere Kabelwickelband, mit einem textilen Träger, der mindestens auf einer Seite mit einer Klebeschicht versehen ist, die mindestens zwei Teilschichten umfasst, von denen die erste Teilschicht unmittelbar am Träger angeordnet ist und die zweite Teilschicht auf der ersten Teilschicht aufliegt, wobei die erste Teilschicht aus einem polymeren klebenden oder nichtklebenden ersten Material besteht, welches mit einem derartigen spezifischen Mindest-Flächengewicht aufgetragen ist, dass das Material zumindest die Poren des Trägers, dessen Luftdurchlässigkeit - gemessen nach DIN 53 887 - bei einem Prüfdruck von 500 Pa größer ist als 200 l/m²s und/oder bei einer Messung unter einem Prüfdruck von 200 Pa größer ist als 100 l/m²s, oberflächlich verschließt, wobei das spezifische Höchst-Flächengewicht des ersten Materials nicht größer ist als 70 % des spezifischen Flächengewichts des Trägers, und dass die zweite Teilschicht aus einem polymeren selbstklebenden zweiten Material besteht, wobei ein polymeres nichtklebendes Material der ersten Teilschicht ausgewählt ist aus den Gruppen Ethyl-Vinylacetate (EVA) mit einem Vinylacetat-Anteil im Bereich von 10 - 50 Masse-%, Ethylen-Propylen-Copolymere mit einem Ethylen-Anteil von im Bereich von 5 - 20 Masse-%, mit Maleinsäureanhydrid oder mit Silan modifizierte Polypropylene, Polyolefin-Elastomere, olefinische Block-Copolymere, amorphe Poly-Alpha-Olefine, Polyamid-Hotmelts, oder wobei ein polymeres klebendes Material der ersten Teilschicht und/oder der zweiten Teilschicht ein druckempfindlicher Haftklebstoff ist, welcher ein natürlicher oder ein synthetischer Kautschuk oder welcher ein Acrylatklebstoff ist, wobei eine Eindringtiefe des Materials der ersten Teilschicht in den Träger im Bereich von bis zu 85 % bezogen auf die Dicke des Trägers liegt.

2. Klebeband nach Anspruch 1,
**dadurch gekennzeichnet, dass** das spezifische Mindest-Flächengewicht des Materials der ersten Teilschicht nicht kleiner als 5 % des spezifischen Flächengewichts des Trägers ist und vorzugsweise in einem Bereich von 15 % bis 30 % des spezifischen Flächengewichts des Trägers liegt.

3. Klebeband nach Anspruch 1 oder 2,
**dadurch gekennzeichnet, dass** das spezifische Höchst-Flächengewicht des Materials der ersten Teilschicht nicht größer ist als 50 %, bevorzugt nicht größer als 40 %, des spezifischen Flächengewichts des Trägers.

4. Klebeband nach einem der Ansprüche 1 bis 3,
**dadurch gekennzeichnet, dass** eine Eindringtiefe des Materials der ersten Teilschicht in den Träger im Bereich von mindestens 5 %,vorzugsweise von 10 % bis 50 %, besonders bevorzugt von 15 % bis 30 %, bezogen auf die Dicke des Trägers liegt.

5. Klebeband nach einem der Ansprüche 1 bis 4,
**dadurch gekennzeichnet, dass** das polymere klebende Material der ersten Teilschicht und/oder der zweiten Teilschicht ein Schmelzkleber, insbesondere auf der Basis eines Styrol-Butadien- oder eines Styrol-Isopren-Blockcopolymers, ist.

6. Klebeband nach einem der Ansprüche 1 bis 5,
**dadurch gekennzeichnet, dass** das polymere klebende Material der ersten Teilschicht und/oder der zweiten Teilschicht ein lösungsmittelfreier UV-vernetzbarer Acrylatklebstoff ist.

7. Klebeband nach einem der Ansprüche 1 bis 6,
**dadurch gekennzeichnet, dass** der textile Träger ein Gewebe, Gewirk, ein Vlies oder ein daraus gebildeter Verbund ist, wobei der Träger vorzugsweise vollständig aus einem Vlies, insbesondere aus einem Polyesternähvlies, oder wobei der Träger vorzugsweise alternativ vollständig aus einem Polyestergewebe, insbesondere aus Polyethylenterephthalat (PET), besteht oder wobei der Träger unter Verwendung von Fasern aus Polyamid (PA) gefertigt ist.

8. Klebeband nach einem der Ansprüche 1 bis7,
**dadurch gekennzeichnet, dass** das spezifische Flächengewicht des Trägers im Bereich von 15 g/m² bis 500 g/m², insbesondere im Bereich von 50 g/m² bis 250 g/m², liegt.

9. Klebeband nach einem der Ansprüche 1 bis 8,
**dadurch gekennzeichnet, dass** das Verhältnis des Flächengewichts der zweiten Teilschicht zum Flächengewicht der ersten Teilschicht im Bereich von 0,2 bis 10 : 1, insbesondere im Bereich von 0,7 bis 2 : 1, besonders bevorzugt bei 1 : 1, liegt.

10. Klebeband nach einem der Ansprüche 1 bis 9,
**dadurch gekennzeichnet, dass** das Verhältnis des Flächengewichts der ersten Teilschicht zum Flächengewicht der zweiten Teilschicht im Bereich von 1 : 3 bis 3 :1 liegt.

11. Klebeband nach einem der Ansprüche 1 bis 10,
**dadurch gekennzeichnet, dass** ein spezifisches Mindest-Flächengewicht der zweiten Teilschicht 30 g/m² beträgt.

12. Klebeband nach einem der Ansprüche 1 bis 11,
**gekennzeichnet durch** eine Mindestabriebfestigkeit der Klasse D nach LV 312 (10/2009).

13. Verfahren zur Herstellung eines Klebebandes nach einem der Ansprüche 1 bis 12, wobei auf einen textilen Träger mindestens auf einer Seite eine Klebeschicht aufgetragen wird, die mindestens zwei Teilschichten umfasst, von denen die erste Teilschicht unmittelbar am Träger angeordnet ist, und die zweite Teilschicht auf der ersten Teilschicht aufliegt, wobei die erste Teilschicht aus einem polymeren klebenden oder nichtklebenden ersten Material gefertigt wird, welches mit einem derartigen spezifischen Mindest-Flächengewicht aufgetragen wird, dass das Material zumindest die Poren des Trägers, dessen Luftdurchlässigkeit - gemessen nach DIN 53 887 - bei einem Prüfdruck von 500 Pa größer ist als 200 l/m²s und/oder bei einer Messung unter einem Prüfdruck von 200 Pa größer ist als 100 l/m²s, oberflächlich verschließt, wobei das spezifische Höchst-Flächengewicht des ersten Materials nicht größer ist als 70 % des spezifischen Flächengewichts des Trägers, und dass die zweite Teilschicht aus einem polymeren selbstklebenden zweiten Material gefertigt wird, wobei ein polymeres nichtklebendes Material der ersten Teilschicht ausgewählt wird aus den Gruppen Ethyl-Vinylacetate (EVA) mit einem Vinylacetat-Anteil im Bereich von 10 - 50 Masse-%, Ethylen-Propylen-Copolymere mit einem Ethylen-Anteil von im Bereich von 5 - 20 Masse-%, mit Maleinsäureanhydrid oder mit Silan modifizierte Polypropylene, Polyolefin-Elastomere, olefinische Block-Copolymere, amorphe Poly-Alpha-Olefine, Polyamid-Hotmelts oder wobei ein polymeres klebendes Material der ersten Teilschicht und/oder der zweiten Teilschicht ein druckempfindlicher Haftklebstoff ist, welcher ein natürlicher oder ein synthetischer Kautschuk oder welcher ein Acrylatklebstoff ist, wobei eine Eindringtiefe des Materials der ersten Teilschicht in den Träger im Bereich von 5 % bis 85 % bezogen auf die Dicke des Trägers eingestellt wird.

14. Verfahren nach Anspruch 13,
**gekennzeichnet durch** die Merkmale des kennzeichnenden Teils eines oder mehrerer der Ansprüche 2 bis 4.

15. Verfahren nach Anspruch 13,
**gekennzeichnet durch** die Merkmale des kennzeichnenden Teils des Anspruchs 5 oder 6, wobei der textile Träger ohne eine seiner Verdichtung dienende Vorbehandlung eingesetzt wird, und wobei die Klebstoffe, also das polymere klebende Material, unter Zusatz von Lösungsmitteln aus einer Lösung oder - nach Erwärmung - aus einer Schmelze im Extrusionsverfahren auf den Träger aufgebracht wird.

16. Verfahren nach Anspruch 13,
**gekennzeichnet durch** die Merkmale des kennzeichnenden Teils eines oder mehrerer der Ansprüche 7 bis 12.

17. Verfahren nach einem der Ansprüche 13 bis 16,
**dadurch gekennzeichnet, dass** sowohl in der ersten Teilschicht, falls diese aus einem polymeren klebenden Material besteht, als auch in jedem Fall, insbesondere aber, wenn die erste Teilschicht nichtklebend ist, in der zweiten Teilschicht lösungsmittelfreie UV-vernetzbare Acrylatklebstoffe oder synthetische Kautschuk-Schmelzklebstoffe als druckempfindliche Haftklebstoffe eingesetzt werden.

18. Verfahren nach einem der Ansprüche 13 bis 17,
**dadurch gekennzeichnet, dass** ein erster Klebstoff, also das polymere klebende Material der ersten Teilschicht, als Lösung aufgesprüht wird und ein zweiter Klebstoff, also das polymere klebende Material der zweiten Teilschicht, als Schmelze mittels Walzen oder Rakeln auf das Substrat aufgetragen wird oder umgekehrt.

19. Verfahren nach einem der Ansprüche 13 bis18,
**dadurch gekennzeichnet, dass** die erste und zweite Teilschicht der Klebeschicht nicht Nass-in-Nass aufgetragen werden, sondern nur nach vorheriger Zwischenaushärtung der Klebemasse in der ersten Teilschicht, wenn die Klebemasse in der ersten Teilschicht lösungsmittelhaltig ist und die zweite Teilschicht aus einer Schmelze oder aus einem anderen lösungsmittelfreien System aufgetragen wird.

20. Verfahren nach einem der vorhergehenden Ansprüche,
**dadurch gekennzeichnet, dass** bei einem Vliesträger in der ersten Teilschicht und/oder in der zweiten Teilschicht, insbesondere, wenn die erste Teilschicht nichtklebend ist, ein synthetischer Kautschuk-Schmelzklebstoff eingesetzt wird.

21. Verfahren nach einem der vorhergehenden Ansprüche,
**dadurch gekennzeichnet, dass** das spezifische Flächengewicht des Trägers zur Herstellung eines Kabelwickelbandes im Bereich von 50 g/m² bis 250 g/m² liegt.

## Claims

1. Adhesive tape, in particular cable winding tape, with a textile carrier which is provided on at least one side with an adhesive layer comprising at least two partial layers, of which the first partial layer is arranged directly on the carrier and the second partial layer rests on the first partial layer, the first partial layer consisting of a polymeric adhesive or non-adhesive first material which is applied with such a specific minimum weight per unit area that the material at least superficially closes the pores of the carrier whose air permeability - measured according to DIN 53 887 - is larger than 200 l/m²s at a test pressure of 500 Pa and/or is larger than 100 l/m²s when measured under a test pressure of 200 Pa, wherein the maximum specific weight per unit area of the first material is not larger than 70 % of the specific weight per unit area of the carrier, and that the second partial layer consists of a polymeric self-adhesive second material, wherein a polymeric non-adhesive material of the first partial layer is selected from the groups ethyl vinyl acetates (EVA) with a vinyl acetate content in the range of 10 - 50 % by mass, ethylene-propylene copolymers with an ethylene content of in the range of 5 - 20 % by mass, polypropylenes modified with maleic anhydride or with silane, polyolefin elastomers, olefinic block copolymers, amorphous poly-alpha-olefins, polyamide hotmelts, or wherein a polymeric adhesive material of the first partial layer and/or the second partial layer is a pressure-sensitive adhesive which is a natural or synthetic rubber or which is an acrylate adhesive, wherein a penetration depth of the material of the first partial layer into the carrier is in the region of up to 85 % relative to the thickness of the carrier.

2. Adhesive tape according to claim 1,
**characterized in that** the minimum specific weight per unit area of the material of the first partial layer is not less than 5 % of the specific weight per unit area of the carrier and is preferably in a range of 15 % to 30 % of the specific weight per unit area of the carrier.

3. Adhesive tape according to claim 1 or 2,
**characterized in that** the maximum specific weight per unit area of the material of the first partial layer is not larger than 50 %, preferably not larger than 40 %, of the specific weight per unit area of the carrier.

4. Adhesive tape according to one of claims 1 to 3,
**characterized in that** a penetration depth of the material of the first partial layer into the carrier is in the range of at least 5 %, preferably from 10 % to 50 %, particularly preferably from 15 % to 30 %, relative to the thickness of the carrier.

5. Adhesive tape according to one of claims 1 to 4,
**characterized in that** the polymeric adhesive material of the first sublayer and/or the second sublayer is a hot-melt adhesive, in particular based on a styrene-butadiene or a styrene-isoprene block copolymer.

6. Adhesive tape according to one of claims 1 to 5,
**characterized in that** the polymeric adhesive material of the first sublayer and/or the second sublayer is a solvent-free UV-crosslinkable acrylate adhesive.

7. Adhesive tape according to one of claims 1 to 6,
**characterized in that** the textile carrier is a woven fabric, knitted fabric, a non-woven fabric or a composite formed therefrom, the carrier preferably consisting entirely of a non-woven fabric, in particular of a polyester sewn non-woven fabric, or the carrier preferably alternatively consisting entirely of a polyester fabric, in particular of polyethylene terephthalate (PET), or the carrier being manufactured using fibres of polyamide (PA).

8. Adhesive tape according to one of claims 1 to 7,
**characterized in that** the specific weight per unit area of the carrier is in the range of 15 g/m² to 500 g/m², in particular in the range of 50 g/m² to 250 g/m².

9. Adhesive tape according to one of claims 1 to 8,
**characterized in that** the ratio of the weight per unit area of the second partial layer to the weight per unit area of the first partial layer is in the range of 0.2 to 10 : 1, in particular in the range of 0.7 to 2 : 1, particularly preferably 1 : 1.

10. Adhesive tape according to one of claims 1 to 9,
**characterized in that** the ratio of the weight per unit area of the first partial layer to the weight per unit area of the second partial layer is in the range of 1 : 3 to 3 : 1.

11. Adhesive tape according to one of claims 1 to 10,
**characterized in that** a minimum specific weight per unit area of the second sublayer is 30 g/m².

12. Adhesive tape according to one of claims 1 to 11,
**characterized by** a minimum abrasion resistance of class D according to LV 312 (10/2009).

13. Method for producing an adhesive tape according to one of claims 1 to 12, wherein an adhesive layer is applied to a textile carrier on at least one side, which adhesive layer comprises at least two partial layers, of which the first partial layer is arranged directly on the carrier, and the second partial layer rests on the first partial layer, wherein the first partial layer is made of a polymeric adhesive or non-adhesive first material, which is applied with a minimum specific weight per unit area such that the material at least superficially closes the pores of the carrier, the air permeability of which - measured according to DIN 53 887 - is larger than 200 l/m²s at a test pressure of 500 Pa and/or is larger than 100 l/m²s when measured under a test pressure of 200 Pa, the maximum specific weight per unit area of the first material being no larger than 70 % of the specific weight per unit area of the carrier, and that the second partial layer is made of a polymeric self-adhesive second material, wherein a polymeric non-adhesive material of the first partial layer is selected from the groups ethyl vinyl acetates (EVA) with a vinyl acetate content in the range of 10 - 50 % by mass, ethylene-propylene copolymers with an ethylene content of in the range of 5 - 20 % by mass, polypropylenes modified with maleic anhydride or with silane, polyolefin elastomers, olefinic block copolymers, amorphous poly-alpha-olefins, polyamide hotmelts or wherein a polymeric adhesive material of the first partial layer and/or the second partial layer is a pressure-sensitive adhesive which is a natural or a synthetic rubber or which is an acrylate adhesive, wherein a penetration depth of the material of the first partial layer into the carrier is set in the range of 5 % to 85 % based on the thickness of the carrier.

14. Process according to claim 13,
**characterized by** the features of the characterizing part of one or more of claims 2 to 4.

15. Process according to claim 13,
**characterized by** the features of the characterizing part of claim 5 or 6, wherein the textile carrier is used without a pretreatment serving to compact it, and wherein the adhesives, i. e. the polymeric adhesive material, are applied to the carrier with the addition of solvents from a solution or - after heating - from a melt in an extrusion process.

16. Process according to claim 13,
**characterized by** the features of the characterizing part of one or more of claims 7 to 12.

17. Process according to one of claims 13 to 16,
**characterized in that** both in the first sublayer, if this consists of a polymeric adhesive material, and in any case, but in particular if the first sublayer is non-adhesive, solvent-free UV-crosslinkable acrylate adhesives or synthetic rubber hot-melt adhesives are used as pressure-sensitive adhesives in the second sublayer.

18. Process according to one of claims 13 to 17,
**characterized in that** a first adhesive, i. e. the polymeric adhesive material of the first sublayer, is sprayed on as a solution and a second adhesive, i. e. the polymeric adhesive material of the second sublayer, is applied to the substrate as a melt by means of rollers or blades or vice versa.

19. Process according to one of claims 13 to18,
**characterized in that** the first and second partial layers of the adhesive layer are not applied wet-on-wet, but only after prior intermediate curing of the adhesive composition in the first partial layer, if the adhesive composition in the first partial layer contains solvent and the second partial layer is applied from a melt or from another solvent-free system.

20. Process according to one of the previous claims,
**characterized in that** for a non-woven carrier a synthetic rubber hotmelt adhesive is used in the first partial layer and/or in the second partial layer, in particular if the first partial layer is non-adhesive.

21. Process according to one of the previous claims,
**characterized in that** the specific weight per unit area of the carrier for producing a cable winding tape is in the range of 50 g/m² to 250 g/m².

## Revendications

1. Ruban adhésif, en particulier bande à enrouler pour câbles, comportant un support textile, qui au moins sur une face est pourvu d'une couche adhésive, qui comprend au moins deux couches partielles, parmi lesquelles la première couche partielle est disposée directement sur le support et la deuxième couche partielle repose sur la première couche partielle, la première couche partielle étant constituée d'un premier matériau polymère, adhésif ou non adhésif, qui est appliqué selon une masse surfacique minimale spécifique appropriée ; en ce que le matériau obture en surface au moins les pores du support, dont la perméabilité à l'air - mesurée selon DIN 53 887 - sous une pression d'essai de 500 Pa est supérieure à 200 l/m²s et/ou, pour une mesure sous une pression d'essai de 200 Pa, est supérieure à 100 l/m²s, la masse surfacique maximale spécifique du premier matériau n'étant pas supérieure à 70 % de la masse surfacique spécifique du support, et en ce que la deuxième couche partielle est constituée d'un deuxième matériau autoadhésif polymère, un matériau non adhésif polymère de la première couche partielle étant choisi dans les groupes éthyl-acétate de vinyle (EVA) ayant une proportion d'acétate de vinyle dans la plage de 10 à 50 % en masse, copolymères éthylène-propylène ayant une proportion d'éthylène dans la plage de 5 à 20 % en masse, polypropylènes modifiés par de l'anhydride maléique ou un silane, élastomères de polyoléfine, copolymères à blocs oléfiniques, poly-alpha-oléfines amorphes, adhésifs fusibles à base de polyamide ; ou un matériau adhésif polymère de la première couche partielle et/ou de la deuxième couche partielle étant un adhésif de contact sensible à la pression, qui est un caoutchouc naturel ou synthétique ou qui est un adhésif à base d'acrylate, la profondeur de pénétration du matériau de la première couche partielle dans le support étant comprise dans la plage allant jusqu'à 85 % par rapport à l'épaisseur du support.

2. Ruban adhésif selon la revendication 1, **caractérisé en ce que** la masse surfacique minimale spécifique du matériau de la première couche partielle n'est pas inférieure à 5 % de la masse surfacique spécifique du support et de préférence est comprise dans la plage de 15 % à 30 % de la masse surfacique spécifique du support.

3. Ruban adhésif selon la revendication 1 ou 2, **caractérisé en ce que** la masse surfacique maximale spécifique du matériau de la première couche partielle n'est pas supérieure à 50 %, de préférence n'est pas supérieure à 40 % de la masse surfacique spécifique du support.

4. Ruban adhésif selon l'une des revendications 1 à 3, **caractérisé en ce qu'**une profondeur de pénétration du matériau de la première couche partielle dans le support est comprise dans la plage d'au moins 5 %, de préférence de 10 % à 50 %, d'une manière particulièrement préférée de 15 % à 30 %, par rapport à l'épaisseur du support.

5. Ruban adhésif selon l'une des revendications 1 à 4, **caractérisé en ce que** le matériau adhésif polymère de la première couche partielle et/ou de la deuxième couche partielle est un adhésif fusible, en particulier à base d'un copolymère à blocs styrène-butadiène ou styrène-isoprène.

6. Ruban adhésif selon l'une des revendications 1 à 5, **caractérisé en ce que** le matériau adhésif polymère de la première couche partielle et/ou de la deuxième couche partielle est un adhésif à base d'acrylate, réticulable aux UV, sans solvant.

7. Ruban adhésif selon l'une des revendications 1 à 6, **caractérisé en ce que** le support textile est un tissu, un tricot, un non-tissé ou un composite formé à partir d'eux, le support étant constitué de préférence en totalité d'un non-tissé, en particulier d'un non-tissé cousu en polyester, ou le support étant de préférence, en alternance, complètement constitué d'un tissu de polyester, en particulier de poly(téréphtalate d'éthylène) (PET), ou le support étant fabriqué par utilisation de fibres de polyamide (PA).

8. Ruban adhésif selon l'une des revendications 1 à 7, **caractérisé en ce que** la masse surfacique spécifique du support est comprise dans la plage de 15 g/m² à 500 g/m², en particulier dans la plage de 50 g/m² à 250 g/m².

9. Ruban adhésif selon l'une des revendications 1 à 8, **caractérisé en ce que** le rapport de la masse surfacique de la deuxième couche partielle à la masse surfacique de la première couche partielle est compris dans la plage de 0,2 à 10:1, en particulier dans la plage de 0,7 à 2:1, d'une manière particulièrement préférée est de 1:1.

10. Ruban adhésif selon l'une des revendications 1 à 9, **caractérisé en ce que** le rapport de la masse surfacique de la première couche partielle à la masse surfacique de la deuxième couche partielle est compris dans la plage de 1:3 à 3:1.

11. Ruban adhésif selon l'une des revendications 1 à 10, **caractérisé en ce qu'**une masse surfacique minimale spécifique de la deuxième couche partielle est de 30 g/m².

12. Ruban adhésif selon l'une des revendications 1 à 11, **caractérisé par** une résistance minimale à l'abrasion de la classe D selon LV 312 (10/2009).

13. Procédé de fabrication d'un ruban adhésif selon l'une des revendications 1 à 12, dans lequel on applique sur un support textile, au moins sur une face, une couche adhésive qui comprend au moins deux couches partielles, parmi lesquelles la première couche partielle est disposée directement sur le support et la deuxième couche partielle repose sur la première couche partielle, la première couche partielle étant fabriquée à partir d'un premier matériau polymère, adhésif ou non adhésif, qui est appliqué selon une masse surfacique minimale spécifique appropriée ; en ce que le matériau obture en surface au moins les pores du support, dont la perméabilité à l'air - mesurée selon DIN 53 887 - pour une pression d'essai de 500 Pa est supérieure à 200 l/m²s et/ou, pour une mesure sous une pression d'essai de 200 Pa, est supérieure à 100 l/m²s, la masse surfacique maximale spécifique du premier matériau n'étant pas supérieure à 70 % de la masse surfacique spécifique du support, et en ce que la deuxième couche partielle est fabriquée à partir d'un deuxième matériau autoadhésif polymère, un matériau non adhésif polymère de la première couche partielle étant choisi dans les groupes éthyl-acétate de vinyle (EVA) avec une proportion d'acétate de vinyle dans la plage de 10 à 50 % en masse, copolymères éthylène-propylène ayant une proportion d'éthylène dans la plage de 5 à 20 % en masse, polypropylènes modifiés par de l'anhydride maléique ou un silane, élastomères de polyoléfine, copolymères à blocs oléfiniques, poly-alpha-oléfines amorphes, adhésifs fusibles à base de polyamide ; ou un matériau adhésif polymère de la première couche partielle et/ou de la deuxième couche partielle étant un adhésif de contact sensible à la pression, qui est un caoutchouc naturel ou synthétique ou qui est un adhésif à base d'acrylate, une profondeur de pénétration du matériau de la première couche partielle dans le support étant ajustée dans la plage de 5 % à 85 % par rapport à l'épaisseur du support.

14. Procédé selon la revendication 13, **caractérisé par** les caractéristiques de la partie caractéristique d'une ou plusieurs des revendications 2 à 4.

15. Procédé selon la revendication 13, **caractérisé par** les caractéristiques de la partie caractéristique de la revendication 5 ou 6, le support textile étant utilisé sans traitement préalable servant à sa consolidation, et les adhésifs, c'est-à-dire le matériau adhésif polymère, étant appliqués sur le support par un procédé par extrusion, avec addition de solvants à partir d'une solution ou encore - après chauffage - à partir d'une masse fondue.

16. Procédé selon la revendication 13, **caractérisé par** les caractéristiques de la partie caractéristique d'une ou plusieurs des revendications 7 à 12.

17. Procédé selon l'une des revendications 13 à 16, **caractérisé en ce que** tant dans la première couche partielle, dans le cas dans lequel elle est constituée d'un matériau adhésif polymère, que, dans chaque cas également, mais en particulier dans lequel la première couche partielle n'est pas adhésive, dans la deuxième couche partielle, on utilise des adhésifs à base d'acrylates réticulables aux UV, sans solvant, ou des adhésifs fusibles à base de caoutchouc synthétique, en tant qu'adhésifs de contact sensibles à la pression.

18. Procédé selon l'une des revendications 13 à 17, **caractérisé en ce qu'**un premier adhésif, c'est-à-dire le premier matériau adhésif polymère de la première couche partielle, est pulvérisé sous forme d'une solution, et un deuxième adhésif, c'est-à-dire le matériau adhésif polymère de la deuxième couche partielle, est appliqué à l'état fondu à l'aide de rouleaux ou de racles sur le substrat, ou inversement.

19. Procédé selon l'une des revendications 13 à 18, **caractérisé en ce que** la première et la deuxième couche partielle de la couche adhésive ne sont pas appliquées mouillé sur mouillé, mais seulement après un durcissement intermédiaire préalable de la masse adhésive dans la première couche partielle, quand la masse adhésive dans la première couche partielle contient un solvant et que la deuxième couche partielle est appliquée à partir d'une masse fondue ou d'un autre système sans solvant.

20. Procédé selon l'une des revendications précédentes, **caractérisé en ce qu'**on utilise un adhésif fusible à base de caoutchouc synthétique dans le cas d'un support non-tissé dans la première couche partielle et/ou dans la deuxième couche partielle, en particulier quand la première couche partielle est non adhésive.

21. Procédé selon l'une des revendications précédentes, **caractérisé en ce que** la masse surfacique spécifique du support est, pour la fabrication d'une bande à enrouler pour câbles, comprise dans la plage de 50 g/m² à 250 g/m².
